# EUROPÄISCHE PATENTSCHRIFT

(11) **EP 1 754 305 B1**
(45) Veröffentlichungstag und Bekanntmachung des Hinweises auf die Patenterteilung: **21.09.2011**
(21) Anmeldenummer: 05770282.1
(22) Anmeldetag: 18.05.2005
(51) Int. Cl.: H02M 7/48

(54) **VERFAHREN ZUM BETRIEB EINES ELEKTRONISCH GESTEUERTEN WECHSELRICHTERS UND ANORDNUNG ZUR DURCHFÜHRUNG DES VERFAHRENS**
METHOD FOR OPERATING AN ELECTRONICALLY CONTROLLED INVERTER AND ARRANGEMENT FOR CARRYING OUT SAID METHOD
PROCEDE POUR FAIRE FONCTIONNER UN ONDULEUR A COMMANDE ELECTRONIQUE ET DISPOSITIF POUR REALISER CE PROCEDE

(30) Priorität: 08.06.2004 AT 9942004
(43) Veröffentlichungstag der Anmeldung: 21.02.2007
(73) Patentinhaber: Siemens Aktiengesellschaft, 80333 München (DE)
(72) Erfinder: HALLAK, Jalal, A-1220 Wien (AT)
(74) Vertreter: Maier, Daniel Oliver
(86) Internationale Anmeldenummer: PCT/EP2005/005394
(87) Internationale Veröffentlichungsnummer: WO 2005/122371

(56) Entgegenhaltungen:
- KIKUCHI J ET AL: "Three phase PWM boost-buck rectifiers with power regenerating capability" CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001, CONFERENCE RECORD OF THE IEEE INDUSTRY APPLICATIONS CONFERENCE. IAS ANNUAL MEETING, NEW YORK, NY : IEEE, US, Bd. VOL. 1 OF 4. CONF. 36, 30. September 2001 (2001-09-30), Seiten 308-315, XP010561721 ISBN: 0-7803-7114-3
- "The Four Boostbuck Topologies"[Online] 2003, XP002354362 Gefunden im Internet: URL:http://www.boostbuck.com/TheFourTopolo gies.html> [gefunden am 2005-11-16]

## Beschreibung

Die Erfindung betrifft ein Verfahren zum Betrieb eines elektronisch gesteuerten Wechselrichters, wobei als Wechselrichter ein Einphasen-wechselrichter mit zwei Gleichspannungsanschlüssen, zwei Wechselspannungs-anschlüssen und mehreren, mittels Mikrocontroller gesteuerten Halbleiterschaltern vorgesehen ist, und eine Anordnung zur Durchführung des Verfahrens.

Elektronisch gesteuerte Wechselrichter sind beispielsweise aus US-2.:C.M. Penalver, u.a. "Microprocessor Control of DC/AC Static Converters"; IEEE Transactions on Industrial Electronics, Vol. IE-32, No.3, August 1985, S.186 -191; bekannt. Sie werden beispielsweise in Solaranlagen dazu eingesetzt, den durch die Sonnenzellen erzeugten Gleichstrom so umzuformen, dass eine Abgabe in das öffentliche Wechselstrom-Netz möglich ist. Erst damit ist eine praktisch uneingeschränkte Nutzung der solar produzierten Energie gewährleistet.

Die Vielzahl von Anwendungsmöglichkeiten für Wechselrichter hat unter anderem dazu geführt, die Grundtypen von Hochsetzsteller, Hochtiefsetzsteller und Tiefsetzsteller für spezielle Anwendungsfälle abzuwandeln. Als Beispiel sei hier eine Veröffentlichung in der Zeitschrift EDN vom 17. Okt. 2002 "Slave converters power auxiliary outputs", Sanjaya Maniktala; angeführt, in der verschiedene Kombinationsmöglichkeiten von Wechselrichter-Grundtypen beschrieben werden.

Sogenannte CUK-Konverter sind beispielsweise in der Schrift "The Four Boostbuck Topologies", 2003, XP002354362 (URL:http://www.boostbuck.com/TheFourTopologies.html) als invertierende hoch- und tiefsetzende Konverter beschrieben, welche gegenüber einer Reihenschaltung eines Hoch- und eines Tiefsetzstellers einen Schalter weniger aufweisen.

Weitere Kombinationsmöglichkeiten verschiedener Grundschaltungen sind in der Druckschrift KIKUCHI J et al: "Three phase PWM boost-buck rectifiers with power regenerating capability", conference record cf the 2001 IEEE industrie application conference; 36th annual meeting, Chicago, IL; Sept. 30 - Oct. 4, 2001; Seiten 308-315, XP010561721; ISBN 0-7803-7114-3; angegeben.

Der Erfindung liegt die Aufgabe zugrunde, die aus dem Stand der Technik bekannten Wechselrichter weiterzubilden. Insbesondere ist ein verfahren für das Betreiben eines einfach aufgebauten Wechselrichters anzugeben, welches zu einem hohen Wirkungsgrad führt.

Erfindungsgemäß wird die Aufgabe gelöst mit einem Verfahren der eingangs genannten Art, bei dem der Wechselrichter während der positiven Halbwelle der Ausgangswechselspannung so angesteuert wird, dass er nach Art einer Hoch/Tiefsetzsteller-Kaskade arbeitet und bei dem der Wechselrichter während der negativen Halbwelle der Ausgangswechselspannung so angesteuert wird, dass er nach Art eines CUK-Konverters arbeitet, wobei der Wechselrichter eine erste Drossel umfasst, deren erste Seite mit dem positiven Pol einer Gleichspannungsquelle verbunden ist und deren zweite Seite über einen ersten Halbleiterschalter mit dem negativen Pol der Gleichspannungsquelle verbunden ist, wobei die zweite Seite der ersten Drossel über die Serienschaltung eines zweiten Halbleiterschalters und eines dritten Halbleiterschalters mit dem ersten Anschluss einer zweiten Drossel verbunden ist, deren zweiter Anschluss an einen ersten Anschluss eines Wechselspannungsausganges angeschlossen ist, wobei die Verbindung von zweitem und drittem Halbleiterschalter über einen ersten Kondensator und einen fünften Halbleiterschalter mit dem zweiten Anschluss des Wechselspannungsausganges verbunden ist, wobei der negative Pol der Gleichspannungsquelle mit dem zweiten Anschluss des Wechselspannungsausgangs verbunden ist, und wobei die Verbindung von erstem Kondensator und fünftem Halbleiterschalter über einen vierten Halbleiterschalter mit dem ersten Anschluss der zweiten Drossel verbunden ist.

Des Weiteren ist vorgesehen, dass mittels Mikrocontroller während der positiven Halbwelle der Ausgangswechselspannung der erste, zweite, dritte und vierte Halbleiterschalter gepulst und der fünfte Halbleiterschalter permanent eingeschaltet werden, und dass dabei erster und zweiter Halbleiterschalter sowie dritter und vierter Halbleiterschalter jeweils im Gegentakt geschaltet werden und dass während der negativen Halbwelle der Ausgangswechselspannung erster und fünfter Halbleiterschalter im Gegentakt gepulst geschaltet werden, und dass in diesem Zeitraum der zweite und der vierte Halbleiterschalter dauerhaft eingeschaltet und der dritte Halbleiterschalter dauerhaft ausgeschaltet werden.

Die erfindungsgemäße Kombination der Funktionen von Hoch-/Tiefsetzsteller und CUK-Konverter führt zu einem besonders verlustarmen Wechselrichter, der damit auch einen hohen Wirkungsgrad aufweist und daher insbesondere für den Einsatz in solaranlagen besonders geeignet ist.

Günstig ist es, wenn bei einem Wechselrichter zur Durchführung der erfindungsgemäßen Verfahren ein Mikrocontroller vorgesehen ist, welcher zur Steuerung der Halbleiterschalter entsprechend programmiert ist.

Die Erfindung wird anhand von Figuren näher erläutert. Es zeigen beispielhaft:
Fig.1 den Schaltplan eines beispielhaften Wechselrichters
Fig. 2 den Schaltplan eines beispielhaften Wechselrichters bei Verwendung von MOSFETs.
Fig.3, 4, 5 und 6 Stromfluß und Schaltzustände in einem beispielhaften Wechselrichter während der positiven Halbwelle der Ausgangswechselspannung,
Fig.7 und 8 Stromfluß und Schaltzustände in einem beispielhaften Wechselrichter während der negativen Halbwelle der Ausgangswechselspannung, sowie
Fig.9 und Fig.10 den zeitlichen Verlauf beispielhafter Ansteuersignale für die Halbleiterschalter.

Der in den Figuren dargestellte Wechselrichter umfasst eine erste Drossel L1, deren erste Seite mit dem positiven Pol einer Gleichspannungsquelle U_{IN} verbunden ist und deren zweite Seite über einen ersten Halbleiterschalter S1 mit dem negativen Pol der Gleichspannungsquelle U_{IN} verbunden ist.

Die zweite Seite der ersten Drossel L1 ist über die Serienschaltung eines zweiten und eines dritten Halbleiterschalters S2, S3 mit dem ersten Anschluss einer zweiten Drossel L2 verbunden, deren zweiter Anschluss an einem ersten Anschluss eines Wechselspannungsausganges U_{OUT} angeschlossen ist. Die Verbindung von zweitem und drittem Halbleiterschalter S2, S3 ist über einen ersten Kondensator C_{C} und einen fünften Halbleiterschalter (S5) mit dem zweiten Anschluss des Wechselspannungsausgangs (U_{Netz}) verbunden, weiterhin ist eine Verbindung zwischen dem negativen Pol der Gleichspannungsquelle und dem zweiten Anschluss des Wechselspannungsausgangs vorgesehen und der gemeinsame Punkt von erstem Kondensator(C_{C}) und fünftem Halbleiterschalter (S5) ist über einen vierten Halbleiterschalter (S4) ist mit dem ersten Anschluss der zweiten Drossel (L2) verbunden.

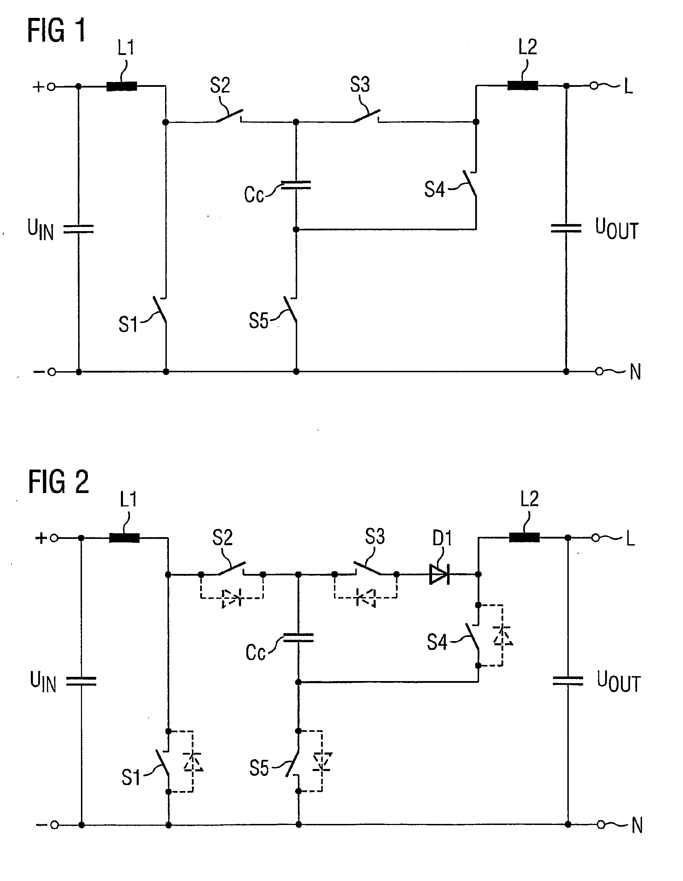

Bei Verwendung von n-kanal Sperrschicht MOSFET als Halbleiterschalter S1, S2, S3, S4 ,S5 ist die Einbaurichtung zu beachten, die in Fig. 2 durch die strichliert dargestellten Diodensymbole angedeutet ist.

Bei dieser Ausgestaltung der Erfindung ist der Einsatz einer Diode D1 zweckmäßig, deren Funktion allerdings auch durch eine entsprechende Ansteuerung der Halbleiterschalter realisiert werden kann.

Die Ansteuerung der Halbleiterschalter erfolgt mittels (nicht dargestelltem) Mikrocontroller.

Dabei werden erfindungsgemäß während der positiven Halbwelle der Ausgangswechselspannung der erste, zweite, dritte und vierte Halbleiterschalter S1,S2, S3, S4 gepulst und der fünfte Halbleiterschalter S5 permanent eingeschaltet, wobei erster und zweiter Halbleiterschalter S1, S2 sowie dritter und vierter Halbleiterschalter S3, S4 jeweils im Gegentakt geschaltet werden. Während der negativen Halbwelle der Ausgangswechselspannung werden erster und fünfter Halbleiterschalter S1,S5 im Gegentakt gepulst geschaltet und der zweite und der vierte Halbleiterschalter S2,S4 dauerhaft eingeschaltet. Der dritte Halbleiterschalter S3 wird in diesem Zeitraum dauerhaft ausgeschaltet.

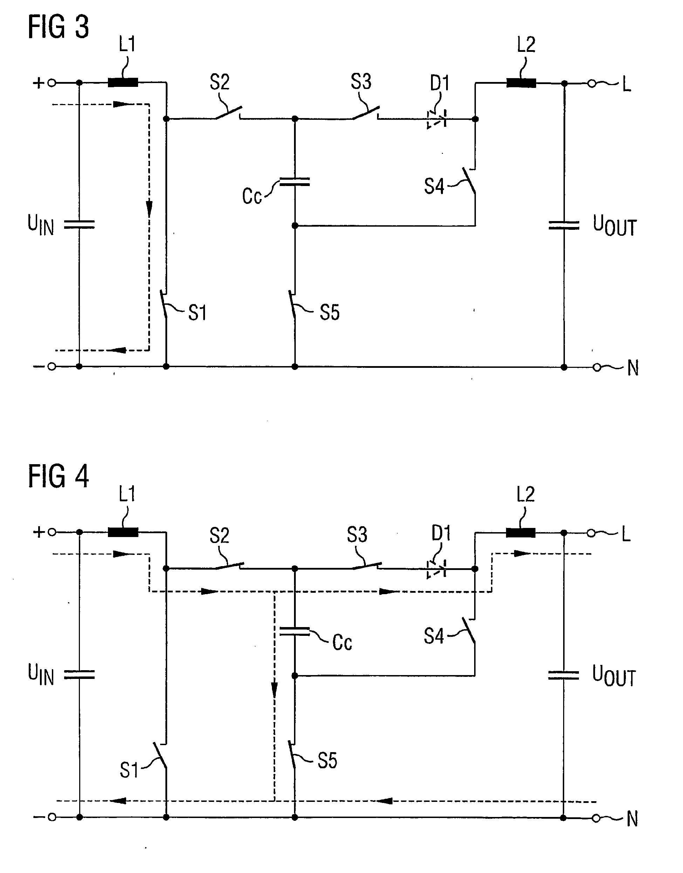

Fig.3 zeigt dabei den Zustand, in dem der Wechselrichter während einer positiven Halbwelle der Ausgangsspannung elektrische Energie aus der Gleichspannungsquelle U_{IN} aufnimmt. Dazu ist der erste Halbleiterschalter S1 geschlossen und damit ein Strompfad zwischen dem positiven Pol der Gleichspannungsquelle U_{IN} über die erste Drossel L1 und den ersten Halbleiterschalter S1, gegeben.

In diesem Zustand speichert die erste Drossel L1 Energie, die - wie in Fig. 4 dargestellt - nach dem Öffnen des ersten Halbleiterschalters S1 bei nunmehr geschlossenem zweiten und dritten Halbleiterschalter S2, S3 über die zweite Drossel L2 an den Wechselspannungsausgang U_{OUT} abgegeben wird.

Der dabei entstehende Stromkreis verläuft vom positiven Pol der Gleichspannungsquelle U_{IN} über die erste Drossel L1, den zweiten und den dritten Halbleiterschalter S2,S3 über die zweite Drossel L2 an den Wechselspannungsausgang U_{OUT} und über das Wechselspannungsnetz zum negativen Pol der Gleichspannungsquelle U_{IN}. Die zweite Drossel L2 speichert dabei Energie. Gleichzeitig wird aufgrund des ebenfalls geschlossenen fünften Halbleiterschalters S5 der erste Kondensator C_{C} geladen.

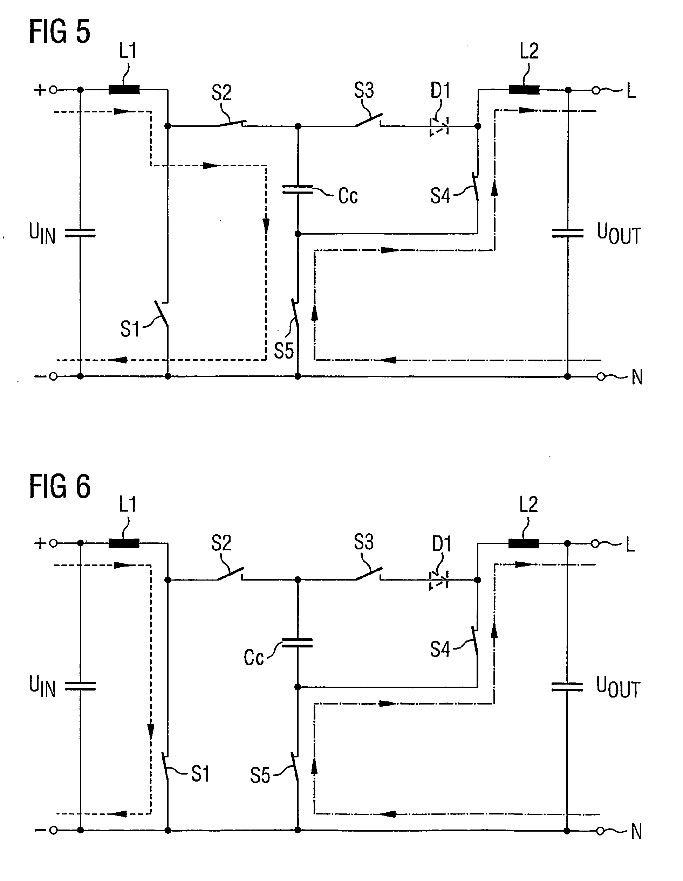

Im nächsten Schaltvorgang wird - wie in Fig. 5 dargestellt - der dritte Halbleiterschalter S3 geöffnet und der vierte Halbleiterschalter S4 geschlossen.

Es bildet sich ein Stromkreis über die zweite Drossel L2, das Wechselspannungsnetz U_{OUT}, und den fünften und den vierten Halbleiterschalter S5,S4 wobei die zweite Drossel die gespeicherte Energie an das Wechselspannungsnetz U_{OUT} abgibt.

Gleichzeitig verläuft ein weiterer Stromkreis vom positiven Pol der Gleichspannungsquelle U_{IN} über die erste Drossel L1, den zweiten Halbleiterschalter S2 über den ersten Kondensator C_{C} und den fünften Halbleiterschalter S5 zum negativen Pol der Gleichspannungsquelle U_{IN} .

Mit dem in Fig. 6 dargestellten Schaltzustand wird ein Schaltzyklus während der positiven Halbwelle abgeschlossen.

Der erste Halbleiterschalter S1 ist geschlossen und damit ein Strompfad zwischen dem positiven Pol der Gleichspannungsquelle U_{IN} über die erste Drossel L1 und den ersten Halbleiterschalter S1 gegeben. Der Wechselrichter nimmt elektrische Energie aus der Gleichspannungsquelle U_{IN} auf.

Gleichzeitig gibt noch die zweite Drossel L2 Energie an das Wechselspannungsnetz U_{OUT} ab, da über den fünften und den vierten Halbleiterschalter S5,S4 der entsprechende Stromkreis noch geschlossen ist, der erst mit Öffnen des vierten Halbleiterschalters S4 unterbrochen wird, womit auch wieder der in Fig. 4 dargestellte Schaltzustand erreicht ist.

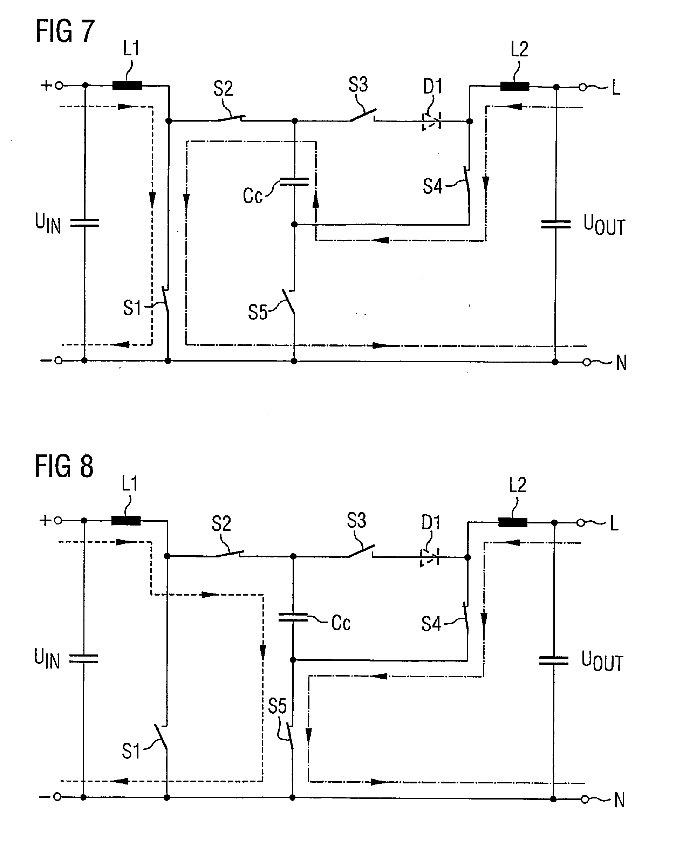

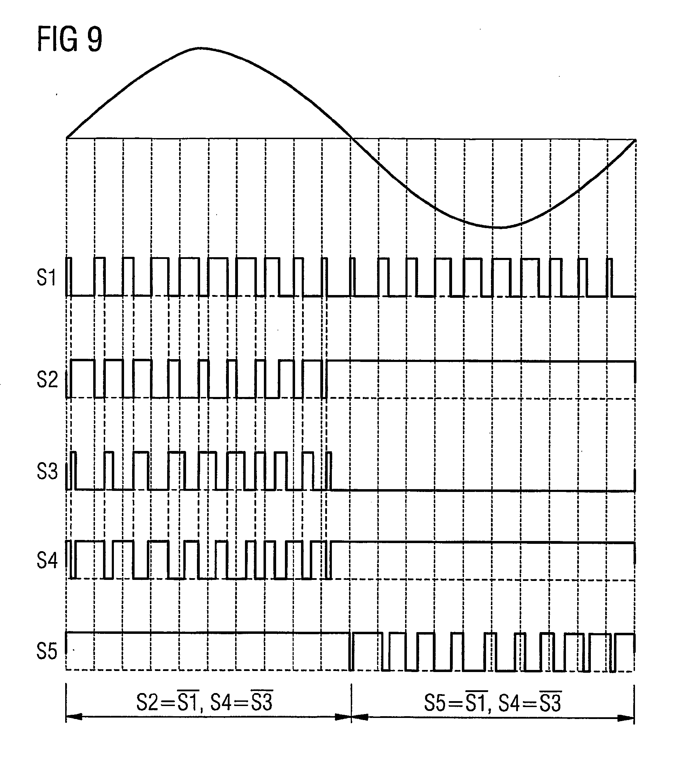

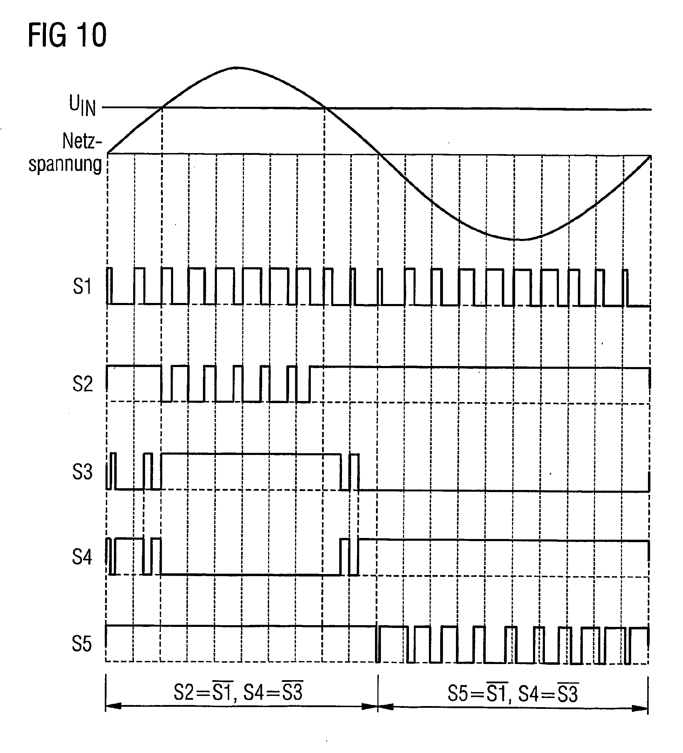

Anhand der Fig. 7 und Fig. 8 werden nun die Schaltzustände während der negativen Halbwelle der Ausgangswechselspannung erläutert. Wie auch aus den Fig. 9 und Fig. 10 ersichtlich, werden in diesem Zeitraum erster und fünfter Halbleiterschalter S1,S5 im Gegentakt gepulst geschaltet, der zweite und der vierte Halbleiterschalter S2,S4 dauerhaft eingeschaltet und der dritte Halbleiterschalter (S3) dauerhaft ausgeschaltet. Damit wird erfindungsgemäß während der negativen Halbwelle der Ausgangswechselspannung die Funktion eines sogenannten CUK-Konverters ausgeführt.

Fig.7 zeigt die Verhältnisse, wenn erster, zweiter und vierter Halbleiterschalter S1, S2, S4 geschlossen und dritter und fünfter Halbleiterschalter S3, S5 geschlossen geöffnet sind. Es bildet sich ein Strompfad zwischen dem positiven Pol der Gleichspannungsquelle U_{IN} über die erste Drossel L1 und den ersten Halbleiterschalter S1, und ein zweiter Strompfad über zweite Drossel L2, vierten Halbleiterschalter S4, ersten Kondensator Cc, sowie zweiten und ersten Halbleiterschalter S2, S1 und das Ausgangswechselspannungsnetz U_{OUT}.

Im nächsten Schaltvorgang werden - wie in Fig. 8 dargestellt - der erste Halbleiterschalter S1 geöffnet und der fünfte Halbleiterschalter S5 im Gegentakt geschlossen.

Die sich daraus ergebenden Stromkreise verlaufen einerseits vom positiven Pol der Gleichspannungsquelle U_{IN} über die erste Drossel L1, den zweiten Halbleiterschalter S2 über den ersten Kondensator C_{C} und den fünften Halbleiterschalter S5 zum negativen Pol der Gleichspannungsquelle U_{IN} und andererseits über die zweite Drossel L2, den vierten und den fünften Halbleiterschalter S4, S5, das Wechselspannungsnetz U_{OUT}.

In Fig. 9 und Fig. 10 und Fig. 10 ist jeweils der beispielhafte Verlauf der Steuersignale für die Halbleiterschalter S1, S2, S3, S4 und S5 dargestellt, wobei die beiden Figuren vorstellbare unterschiedliche Schaltvarianten während des Zeitraumes der positiven Halbwelle der Ausgangswechselspannung darstellen.

## Patentansprüche

1. Verfahren zum Betrieb eines elektronisch gesteuerten Wechselrichters, wobei als Wechselrichter ein Einphasen-Wechselrichter mit zwei Gleichspannungsanschlüssen, zwei Wechselspannungs-anschlüssen und mehreren, mittels Mikrocontroller gesteuerten Halbleiterschaltern vorgesehen ist, wobei der Wechselrichter eine erste Drossel (L1) umfasst, deren erste Seite mit dem positiven Pol einer Gleichspannungsquelle (U_{IN}) verbunden ist und deren zweite Seite über einen ersten Halbleiterschalter (S1) mit dem negativen Pol der Gleichspannungsquelle (U_{IN}) verbunden ist, dass die zweite Seite der ersten Drossel (L1) über die Serienschaltung eines zweiten Halbleiterschalters (S2) und eines dritten Halbleiter-schalters (S3) mit dem ersten Anschluss einer zweiten Drossel (L2) verbunden ist, deren zweiter Anschluss an einem ersten Anschluss eines Wechselspannungsausganges (U_{OUT}) angeschlossen ist, dass die Verbindung von zweitem und drittem Halbleiterschalter (S2, S3) über einen ersten Kondensator (C_{C}) und einen fünften Halbleiterschalter (S5) mit dem zweiten Anschluss des Wechselspannungsausgangs (U_{OUT}) verbunden ist, dass der negative Pol der Gleichspannungsquelle (U_{IN}) mit dem zweiten Anschluss des Wechselspannungsausgangs (U_{OUT}) verbunden ist und dass die Verbindung von erstem Kondensator (C_{C}) und fünftem Halbleiterschalter (S5) über einen vierten Halbleiterschalter (S4) mit dem ersten Anschluss der zweiten Drossel (L2) verbunden ist und dass mittels Mikrocontroller während der positiven Halbwelle der Ausgangswechselspannung der erste, zweite, dritte und vierte Halbleiterschalter (S1,S2, S3, S4) gepulst und der fünfte Halbleiterschalter (S5)permanent eingeschaltet werden, und dass dabei erster und zweiter Halbleiterschalter (S1, S2) sowie dritter und vierter Halbleiterschalter (S3, S4) jeweils im Gegentakt geschaltet werden und dass während der negativen Halbwelle der Ausgangswechselspannung erster und fünfter Halbleiterschalter (S1,S5) im Gegentakt gepulst geschaltet werden, und dass in diesem Zeitraum der zweite and der vierte Halbleiterschalter (S2,S4) dauerhaft eingeschaltet und der dritte Halbleiterschalter (S3) dauerhaft ausgeschaltet werden.

2. Wechselrichter, welcher zur Durchführung des Verfahrens nach Anspruch 1 eingerichtet ist, wobei ein Mikrocontroller vorgesehen ist, welcher zur Steuerung der Halbleiterschalter entsprechend programmiert ist.

## Claims

1. Method for operating an electronically controlled inverter, with a single-phase inverter with two direct current connections, two alternating current connections and a number of semiconductor switches controlled by means of microcontrollers being provided as the inverter, with the inverter comprising a first choke (L1), of which the first side is connected to the positive pole of a DC voltage source (U_{IN}) and of which the second side is connected via a first semiconductor switch (S1) to the negative pole of the DC voltage source (U_{IN}), that the second side of the first choke (L1) is connected via the series circuit of a second semiconductor switch (S2) and a third semiconductor switch (S3) to the first terminal of a second choke (L2), of which the second terminal is connected to a first terminal of an AC voltage output (U_{OUT}), that the connection of second and third semiconductor switch (S2, S3) is connected via a first capacitor (C_{C}) and a fifth semiconductor circuit (S5) to the second terminal of the AC voltage output (U_{OUT}), that the negative pole of the DC voltage source (U_{IN}) is connected to the second terminal of the AC voltage output (U_{OUT}) and that the connection of first capacitor (C_{C}) and fifth semiconductor switch (S5) is connected via a fourth semiconductor switch (S4) to the first terminal of the second choke (L2) and that the first, second, third and fourth semiconductor switches (S1, S2, S3, S4) are pulsed and the fifth semiconductor switch (S5) is permanently switched on by means of microcontrollers during the positive halfwave of the output AC voltage and that in this case first and second semiconductor switch (S1, S2) as well as third and fourth semiconductor switch (S3, S4) are each connected in push-pull mode and that, during the negative halfwave of the output AC voltage, first and fifth semiconductor switch (S1, S5) are connected pulsed in push-pull mode and that in this period the second and the fourth semiconductor switch (S2, S4) are switched on permanently and the third semiconductor switch (S3) is switched off permanently.

2. Inverter which is configured to carry out the method according to claim 1, with a microcontroller being provided which is programmed accordingly to control the semiconductor switch.

## Revendications

1. Procédé pour faire fonctionner un onduleur à commande électronique, comme onduleur étant prévu un onduleur monophasé avec deux bornes de tension continue, deux bornes de tension alternative et plusieurs commutateurs à semi-conducteurs commandés au moyen de microcontrôleurs, ledit onduleur comprenant une première bobine d'inductance (L1), dont le premier côté est relié au pôle positif d'une source de tension continue (U_{IN}) et dont le deuxième côté est relié via un premier commutateur à semi-conducteurs (S1) au pôle négatif de la source de tension continue (U_{IN}), le deuxième côté de la première bobine d'inductance (L1) étant relié via le montage en série d'un deuxième commutateur à semi-conducteurs (S2) et d'un troisième commutateur à semi-conducteurs (S3) à la première borne d'une deuxième bobine d'inductance (L2), dont la deuxième borne est connectée sur une première borne d'une sortie de tension alternative (U_{OUT}), la liaison du deuxième et troisième commutateurs à semi-conducteurs (S2, S3) étant reliée via un premier condensateur (C_{C}) et un cinquième commutateur à semi-conducteurs (S5) à la deuxième borne de la sortie de tension alternative (U_{OUT}), le pôle négatif de la source de tension continue (U_{IN}) étant relié à la deuxième borne de la sortie de tension alternative (U_{OUT}) et la liaison du premier condensateur (C_{C}) et du cinquième commutateur à semi-conducteurs (S5) étant reliée via un quatrième commutateur à semi-conducteurs (S4) à la première borne de la deuxième bobine d'inductance (L2), et au moyen de microcontrôleurs, durant la demi-onde positive de la tension alternative de sortie, le premier, deuxième, troisième et quatrième commutateurs à semi-conducteurs (S1, S2, S3, S4) étant pulsés et le cinquième commutateur à semi-conducteurs (S5) étant activé en permanence, et le premier et deuxième commutateurs à semi-conducteurs (S1, S2) ainsi que le troisième et quatrième commutateurs à semi-conducteurs (S3, S4) étant respectivement couplés symétriquement, et durant la demi-onde négative de la tension alternative de sortie, le premier et cinquième commutateurs à semi-conducteurs (S1, S5) étant couplés symétriquement de manière pulsée et durant cette période, le deuxième et quatrième commutateurs à semi-conducteurs (S2, S4) étant activés de manière durable et le troisième commutateur à semi-conducteurs (S3) étant désactivé de manière durable.

2. Onduleur, conçu pour la mise en oeuvre du procédé selon la revendication 1, un microcontrôleur étant prévu, lequel est programmé en conséquence pour commander les commutateurs à semi-conducteurs.
